# EUROPEAN PATENT SPECIFICATION

(11) **EP 4 664 699 B1**
(45) Date of publication and mention of the grant of the patent: **02.09.2026**
(21) Application number: 25767230.3
(22) Date of filing: 25.02.2025
(51) Int. Cl.: H02G 3/32, H02G 9/08

(54) **LEAKY CABLE HANGER**
LECKKABELAUFHÄNGER
DISPOSITIF DE SUSPENSION DE CÂBLE RAYONNANT

(30) Priority: 08.03.2024 CN 202410266330
(43) Date of publication of application: 17.12.2025
(73) Proprietor: Zhongtian Radio Frequency Cable Co., Ltd., Nantong, Jiangsu 226009 (CN)
(72) Inventor: WANG, Bin, Nantong, Jiangsu 226009 (CN); SONG, Hao, Nantong, Jiangsu 226009 (CN); SHA, Min, Nantong, Jiangsu 226009 (CN); CAO, Weijia, Nantong, Jiangsu 226009 (CN); ZHAO, Ruijing, Nantong, Jiangsu 226009 (CN); XU, Zongming, Nantong, Jiangsu 226009 (CN)
(74) Representative: Range, Christopher William
(86) International application number: PCT/CN2025/079078
(87) International publication number: WO 2025/185490

(56) References cited:
- CN-A- 110 247 342
- CN-A- 110 970 848
- CN-A- 110 970 857
- CN-A- 117 856 131
- CN-U- 216 355 732
- CN-U- 217 063 135
- CN-U- 220 209 829
- CN-U- 220 457 080
- KR-B1- 102 268 898

## Description

### Technical field

The present disclosure relates to the technical field of laying and installation equipment for cable, in particular to a lifting appliance for leaky cable.

### Background Art

At present, with the deepening of the strategy of developing new high-speed trains operating at higher speeds and building railway lines reserved with higher speed operating conditions, it is indispensable to ensure the safety, stability and reliability of the train-ground wireless communication system. Leaky cables are the main medium for transmission and receiving of wireless communication signals in tunnels, and lifting appliances for leaky cable are the main fixtures for bearing leaky cables, and must be resistant to high wind pressure impact on leaky cables when the train passes at a high speed and resistant to environmental aging.

Existing lifting appliances for leaky cable in high-speed railway are mainly in the following forms: an inward snap-fit form, in which the cover plate is engaged to the inside of the base, but this engagement type is prone to getting loose naturally after the auxiliary latch fails; a latch locking form, in which two or more sets of latches are required to be installed in site on a high-speed railway line in addition to the base and the cover plate, but the additional parts make the overall construction more complicated and may fall into a track area easily; an offset form, i.e. there is a certain offset angle between the injection-molded plastic part and the metal support of the lifting appliance and the metal fixing bolts are exposed, although this form is advantageous in the disassembly of the lifting appliance, there is a risk that the metal fixing bolts may fall off into the track area easily during normal use; and an undercut anchor fixing form, in which the anchor bolts only provide an undercut fixing function, without multiple locking, consequently the fixing of the lifting appliance for leaky cable may be unstable.

CN 110 970 857 discloses a high-load-bearing tensile easy-to-disassemble self-locking leaky cable fixture and production process thereof.

Existing lifting appliances for leaky cable in high-speed railway have the following drawbacks: firstly, there are safety risks for lifting appliances such as those in the inward snap-fit form and in the offset form, although they are helpful for simplifying installation or disassembly, they introduce greater safety risks; secondly, they have high construction requirements, for example, multiple parts have to be carried for the additional latch fixing structures; the latch assembling work can be carried out only after the lifting appliance has been snapped into the leaky cable in site, resulting in severely increased construction time and difficulty; the installation of the undercut anchor involves high process requirements, and the anchor has a simple structure and a single primary locking structure, and may fall off easily if the construction doesn't meet the specification; thirdly, they have high maintenance requirements; specifically, the entire lifting appliance has to be replaced if it is damaged partially, and it is impossible to temporarily repair and fix the lifting appliance at the inspected fault point, causing increased difficulty in subsequent maintenance; besides, the lifting appliance has no marked open/close indication sign, and is fixed at a higher position relative to the head of people; consequently, loose lifting appliances can only be found by approaching, looking up and checking one by one, and can't be repaired in a simple way.

Therefore, it is a technical problem for those skilled in the art to reduce the construction requirements and maintenance requirements of the lifting appliances for leaky cable on the basis of ensuring the safety of the lifting appliances for leaky cable.

### Contents of the Invention

The object of the present disclosure is to provide a lifting appliance for leaky cable, in order to solve the problems that the lifting appliances for leaky cable in the prior art involve potential safety hazards and have high construction requirements and maintenance requirements.

The above object of the present disclosure can be achieved with the following technical solution:
The present disclosure provides a lifting appliance for leaky cable, which comprises:
an anchoring mechanism comprising a connecting screw rod, a locking member and a conical pin, wherein the locking member comprises a connecting portion, a top supporting portion and an anchoring portion that are connected sequentially; the locking member is connected to a distal end of the connecting screw rod via the connecting portion, the top supporting portion is located at a distal end of the connecting portion, the anchoring portion is located at a distal end of the top supporting portion, a first anchoring hole is formed in the anchoring portion, and the conical pin can be embedded into the first anchoring hole and force the anchoring portion to expand outward radially, so that the anchoring portion is fixed in a concrete foundation structure; and
a cable locking mechanism comprising at least one cable bearing bracket and at least one cable locking cover plate, wherein a circumferential limiting block and an axial limiting groove are formed on the cable bearing bracket, an axial limiting portion corresponding to the axial limiting groove is formed on the cable locking cover plate, and a circumferential limiting hook portion corresponding to the circumferential limiting block is formed on the cable locking cover plate; the cable locking cover plate can be pivotally mounted on the cable bearing bracket, wherein a receiving space for mounting a leaky cable is formed between the cable bearing bracket and the cable locking cover plate;
wherein the cable locking mechanism is connected to an end of the anchoring mechanism extending out of the concrete foundation structure;
wherein the diameter of the conical pin is in a gradually enlarged arrangement from a proximal end to a distal end, wherein a maximum value of diameter of the conical pin is greater than the diameter of the first anchoring hole;
wherein the diameter of the top supporting portion is in a gradually enlarged arrangement a proximal end to a distal end; the anchoring mechanism further has an expansion clamp ring sleeved on the connecting portion, a second anchoring hole is formed in the expansion clamp ring, a maximum value of diameter of the top supporting portion is greater than the diameter of the second anchoring hole, and the top supporting portion can be embedded into the second anchoring hole and force the expansion clamp ring to expand outward radially.

In a specific embodiment, the cable locking mechanism further includes a supporting base plate, a mounting hole is formed at the center of the supporting base plate, and the anchoring mechanism is connected to the supporting base plate through the mounting hole.

In a specific embodiment, the anchoring mechanism further includes a connecting threaded sleeve and a fixing bolt, wherein the connecting threaded sleeve is connected to the connecting screw rod via threads, and the fixing bolt is connected to the connecting threaded sleeve via threads after passing through the mounting hole, so as to fix the cable locking mechanism to the anchoring mechanism.

In a specific embodiment, the axial limiting groove is formed at the central portion of the circumferential limiting block, the cable bearing bracket extends inward radially to form two positioning portions opposite to each other in the axial direction, the circumferential limiting block is located between the two positioning portions, and a hook embedding groove is formed between the two positioning portions; in the process that the cable locking cover plate is pivotally mounted on the cable bearing bracket, the circumferential limiting hook portion can elastically contract inward radially under a squeezing action of the circumferential limiting block, and can bounce back to a lower end face of the circumferential limiting block through the hook embedding groove and hook the circumferential limiting block, so as to lock the cable locking cover plate and the cable bearing bracket.

In a specific embodiment, the circumferential limiting block extends to form an auxiliary locking portion protruding beyond the two positioning portions, an auxiliary locking embedding groove is formed in the auxiliary locking portion, the cable locking cover plate extends outward radially to form an auxiliary locking elastic hook corresponding to the auxiliary locking embedding groove; when the circumferential limiting hook portion hooks the circumferential limiting block, the auxiliary locking elastic hook can be elastically embedded into the auxiliary locking embedding groove to assist the locking between the cable locking cover plate and the cable bearing bracket; and when the circumferential limiting hook portion hooks the circumferential limiting block, the axial limiting portion is correspondingly embedded in the axial limiting groove, so that the cable locking cover plate is axially limited by the cable bearing bracket.

In a specific embodiment, the cable locking cover plate extends inward radially to form two elastic pressing sheets opposite to each other, and the leaky cable is pressed against the cable bearing bracket by the two elastic pressing sheets in a state that the leaky cable is arranged in the receiving space.

In a specific embodiment, the cable locking cover plate is made of a material comprising a nylon material in which a polyolefin thermoplastic elastomer material and an environment-friendly melamine flame retardant are added.

In a specific embodiment, a mass fraction of the polyolefin thermoplastic elastomer material is between 5% and 15%.

The present disclosure has the following features and advantages:
1. The cable locking mechanism of the lifting appliance for leaky cable in the present disclosure comprises a cable bearing bracket and a cable locking cover plate, wherein the cable locking cover plate is rotatably connected to the cable bearing bracket, so that the lifting appliance for leaky cable is connected integrally, the number of parts is effectively reduced, thereby the adverse effect of falling-off parts on the fixing stability of the leaky cable and the safety of railway is reduced.
2. The cable locking mechanism of the lifting appliance for leaky cable in the present disclosure greatly improves the speed and efficiency of leaky cable installation by means of a rotary connection between the cable locking cover plate and the cable bearing bracket and a cover snap-fitting and locking structure.
3. The anchoring mechanism of the lifting appliance for leaky cable in the present disclosure has a dual locking function, which enables the cable locking mechanism to be stably anchored and mounted in the concrete foundation structure, thereby the overall installation stability of the lifting appliance for leaky cable is improved.
4. The lifting appliance for leaky cable in the present disclosure has a high overall integration level and outstanding safety and interchangeability.

### Brief Description of Drawings

To explain the technical solution in the embodiments of the present disclosure more clearly, the drawings to be used in the description of the embodiments will be introduced below briefly. Obviously, the drawings used in the description below only illustrate some embodiments of the present disclosure, and those having ordinary skills in the art can work out other drawings based on these drawings without expending any creative labor.
Fig. 1 is a plan structural view of the lifting appliance for leaky cable provided by the present disclosure;
Fig. 2 is a plan structural view of the anchoring mechanism of the lifting appliance for leaky cable provided by the present disclosure;
Fig. 3 is a three-dimensional structural view of the cable locking mechanism with a single auxiliary locking means in the lifting appliance for leaky cable provided by the present disclosure;
Fig. 4 is a plan structural view of the cable locking mechanism with a single auxiliary locking means in the lifting appliance for leaky cable provided by the present disclosure;
Fig. 5 is a three-dimensional structural view of the cable locking mechanism with auxiliary locking means in the lifting appliance for leaky cable provided by the present disclosure;
Fig. 6 is a three-dimensional structural view of the cable locking cover plate of the cable locking mechanism of the lifting appliance for leaky cable provided by the present disclosure; and
Fig. 7 is a three-dimensional structural view of the connection between the cable bearing bracket and the supporting base plate of the cable locking mechanism of the lifting appliance for leaky cable provided by the present disclosure.

### Description of Reference Numerals

1 - anchoring mechanism; 11 - connecting screw rod; 12 - locking member; 121 - connecting portion; 122 - top supporting portion; 123 - anchoring portion; 13 - conical pin; 14 - expansion clamp ring; 15 - connecting threaded sleeve; 16 - fixing bolt;
2 - cable locking mechanism; 20 - reserved disassembly hole; 21 - cable bearing bracket; 210 - limiting groove for leaky cable back rib; 211 - circumferential limiting block; 212 - axial limiting groove; 213 - positioning portion; 214 - hook embedding groove; 215 - auxiliary locking portion; 2151 - auxiliary locking embedding groove; 22 - cable locking cover plate; 221 - axial limiting portion; 222 - circumferential limiting hook portion; 223 - auxiliary locking elastic hook; 224 - elastic pressing sheet; 23 - supporting base plate; 231 - mounting hole; 232 - supporting rib plate; 233 - binding hole; 234 - plug-in slot.

### Embodiments

The technical solution in the embodiments of the present disclosure will be detailed below clearly and completely with reference to the accompanying drawings of the embodiments of the present disclosure. Obviously, the embodiments described herein are only some embodiments of the present disclosure, but not all possible embodiments of the present disclosure. All other embodiments obtained by those having ordinary skills in the art on the basis of the embodiments described herein without expending any creative labor shall be deemed as falling in the scope of protection of the present disclosure.

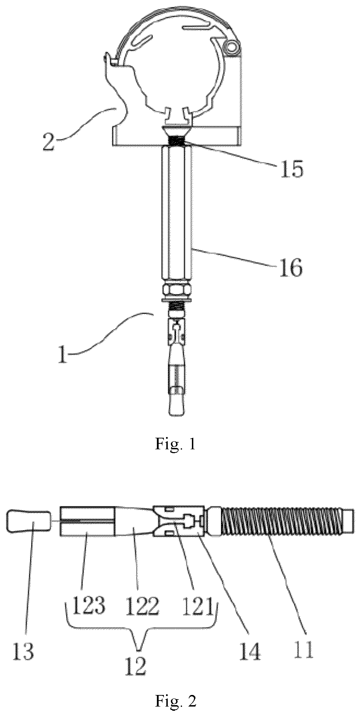

As shown in Figs. 1 to 7, the present disclosure provides a lifting appliance for leaky cable, which comprises an anchoring mechanism 1 and a cable locking mechanism 2, wherein one end of the anchoring mechanism 1 is connected to a concrete foundation structure, and the other end of the anchoring mechanism 1 extending out of the concrete foundation structure is connected with the cable locking mechanism 2. As shown in Fig. 2, the anchoring mechanism 1 comprises: a connecting screw rod 11; a locking member 12 comprising a connecting portion 121, a top supporting portion 122 and an anchoring portion 123 that are connected sequentially, wherein the locking member 12 is connected to a distal end of the connecting screw rod 11 via the connecting portion 121, the top supporting portion 122 is located at the distal end of the connecting portion 121, the anchoring portion 123 is located at a distal end of the top supporting portion 122, and a first anchoring hole is formed in the anchoring portion 123; a conical pin 13 arranged at a distal end of the locking member 12, and the conical pin 13 can be embedded into the first anchoring hole and force the anchoring portion 123 to expand outward radially, so that the anchoring portion 123 can be fixed in the concrete foundation structure. Specifically, after the anchoring portion 123 of the locking member 12 is driven into the concrete foundation structure, the conical pin 13 can force the anchoring portion 123 to expand outward radially, so that the anchoring portion 123 is fixed in the concrete foundation structure, forming a first-tier locking structure. When the locking member 12 is pulled by an external force so that it tends to move outward, the expansion clamp ring 14 can expand outward radially under the action of the top supporting portion 122, thereby the friction with the concrete foundation structure is further increased and a second-tier locking structure is formed. Thus, the connecting screw rod 11 can be arranged on the concrete foundation structure stably by means of the two tiers of locking.

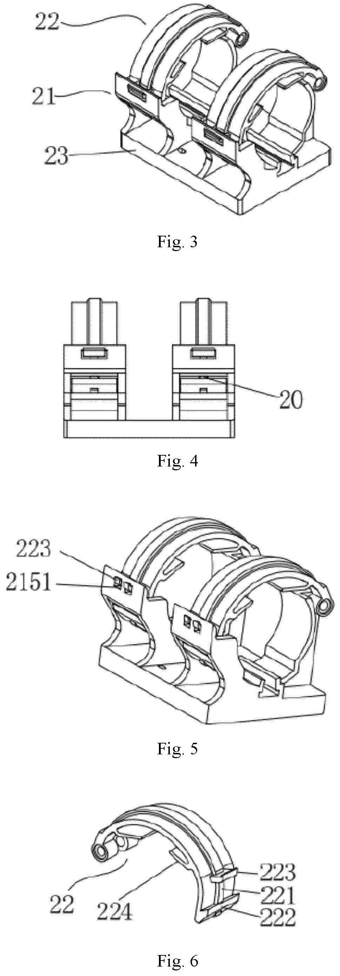

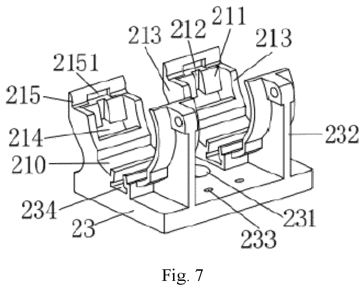

As shown in Figs. 3 to 7, the cable locking mechanism 2 comprises: at least one cable bearing bracket 21, a circumferential limiting block 211 and an axial limiting groove 212 are formed on the cable bearing bracket 21; optionally, as shown in Fig. 7, the circumferential limiting block 211 is provided with a groove, which forms the axial limiting groove 212; at least one cable locking cover plate 22, an axial limiting portion 221 corresponding to the axial limiting groove 212 and a circumferential limiting hook portion 222 corresponding to the circumferential limiting block 211 are formed on the cable locking cover plate 22, wherein the cable locking cover plate 22 is pivotally mounted on the cable bearing bracket 21, and a receiving space for mounting a leaky cable is formed between the cable bearing bracket 21 and the cable locking cover plate 22. In the process that the cable locking cover plate 22 is pivotally mounted on the cable bearing bracket 21, the circumferential limiting hook portion 222 can elastically contract inward radially under a squeezing action of the circumferential limiting block 211, and can bounce back to a lower end face of the circumferential limiting block 211 and hook the circumferential limiting block 211, so as to lock the cable locking cover plate 22 and the cable bearing bracket 21; when the circumferential limiting hook portion 222 hooks the circumferential limiting block 211, the axial limiting portion 221 is correspondingly embedded in the axial limiting groove 212, so that the cable locking cover plate 22 is axially limited by the cable bearing bracket 21, as shown in Figure 4, after the axial limiting portion 221 is embedded in the axial limiting groove 212, there is a radially outward gap, which forms a reserved disassembly hole 20. As shown in Fig. 7, the cable bearing bracket 21 is further provided with a limiting groove 210 for back rib of leaky cable for accommodating a raised back rib marker line of the leaky cable. Specifically, the circumferential limiting block 211 and the axial limiting groove 212 are arranged on the cable bearing bracket 21 by means of integral molding, and the axial limiting portion 221 and the circumferential limiting hook portion 222 are arranged on the cable locking cover plate 22 by means of integral molding. In this embodiment, there are two cable bearing brackets 21, which are arranged opposite to each other; and there are two cable locking cover plates 22, which are respectively connected to the two cable bearing brackets 21.

In order to further explain the lifting appliance for leaky cable in the embodiment of the present disclosure, the specific structure and connection relationship thereof will be further explained below, in which:
According to an embodiment of the present disclosure, as shown in Fig. 2, in order to facilitate the embedding of the conical pin 13 into the first anchoring hole and maintain the stability of the first-tier locking structure, the diameter of the conical pin 13 is in a gradually enlarged arrangement from a proximal end to a distal end, and a maximum value of diameter of the conical pin 13 is greater than the diameter of the first anchoring hole.

Furthermore, the diameter of the top supporting portion 122 is in a gradually enlarged arrangement from a proximal end to a distal end; the anchoring mechanism 1 further has an expansion clamp ring 14 sleeved on the connecting portion 121, a second anchoring hole is formed in the expansion clamp ring 14, a maximum value of diameter of the top supporting portion 122 is greater than the diameter of the second anchoring hole, and the top supporting portion 122 can be embedded in the second anchoring hole and force the expansion clamp ring 14 to expand outward radially, so that the anchoring mechanism 1 can form the second-tier locking structure and keep the stability of the second-tier locking structure when the locking member 12 tends to move outward under an external force.

According to an embodiment of the present disclosure, as shown in Fig. 7, the cable locking mechanism 2 further has a supporting base plate 23, a mounting hole 231 is formed at the central portion of the supporting base plate 23, and the anchoring mechanism 1 is connected to the supporting base plate 23 through the mounting hole 231. At least one supporting rib plate 232 is formed on the supporting base plate 23, and the cable bearing bracket 21 is connected to the supporting base plate 23 via the supporting rib plate 232. Furthermore, a plurality of binding holes 233 are formed in the supporting base plate 23 around the mounting hole 231. Specifically, the mounting hole 231 is located between the two cable bearing brackets 21 and at the center of the supporting base plate 23, and the plurality of binding holes 233 are evenly distributed around the mounting hole 231. In a case that there are two or more cable bearing brackets 21, the binding holes 233 are located between two adjacent cable bearing brackets 21, so that it is convenient to bind and reinforce the leaky cable by means of binding wires inserted through the binding holes 233. In this embodiment, the supporting base plate 23 and the cable bearing bracket 21 are integrally formed, and a plug-in groove 234 is formed in the upper end face of the supporting base plate 23, so that the cable locking mechanism 2 can be used to install other types of cables, thereby the versatility of the cable locking mechanism 2 is improved.

According to an embodiment of the present disclosure, as shown in Fig. 1, the anchoring mechanism 1 further has a connecting threaded sleeve 15 and a fixing bolt 16, wherein the connecting threaded sleeve 15 is connected to the connecting screw rod 11 via threads, and the fixing bolt 16 is connected to the connecting threaded sleeve 15 via threads after passing through the mounting hole 231, so as to fix the cable locking mechanism 2 to the anchoring mechanism 1. Specifically, the anchoring mechanism 1 is connected to the supporting base plate 23 through the mounting hole 231 via threads, so that the cable locking mechanism 2 and the anchoring mechanism 1 are firmly and fixedly connected together.

According to an embodiment of the present disclosure, as shown in Fig. 7, an axial limiting groove 212 is formed at the central portion of the circumferential limiting block 211, the cable bearing bracket 21 extends inward radially to form two positioning portions 213 arranged opposite to each other in the axial direction, the circumferential limiting block 211 is located between the two positioning portions 213, and a hook embedding groove 214 is formed between the two positioning portions 213; in the process that the cable locking cover plate 22 is pivotally mounted on the cable bearing bracket 21, the circumferential limiting hook portion 222 can elastically contract inward radially under a squeezing action of the circumferential limiting block 211, and can bounce back to a lower end face of the circumferential limiting block 211 through the hook embedding groove 214 and hook the circumferential limiting block 211, so as to lock the cable locking cover plate 22 and the cable bearing bracket 21; the hook embedding groove 214 is used to receive the circumferential limiting hook portion 222 that elastically contracts inward radially.

Furthermore, as shown in Fig. 7, the circumferential limiting block 211 extends to form an auxiliary locking portion 215 protruding beyond the two positioning portions 213, an auxiliary locking embedding groove 2151 is formed in the auxiliary locking portion 215, the cable locking cover plate 22 extends outward radially to form an auxiliary locking elastic hook 223 corresponding to the auxiliary locking embedding groove 2151, and the axial limiting portion 221 is located between the auxiliary locking elastic hook 223 and the circumferential limiting hook portion 222, and extends in the circumferential direction; when the circumferential limiting hook portion 222 hooks the circumferential limiting block 211, the auxiliary locking elastic hook 223 bounces back and is embedded in the auxiliary locking embedding groove 2151, so as to assist the locking between the cable locking cover plate 22 and the cable bearing bracket 21; and when the circumferential limiting hook portion 222 hooks the circumferential limiting block 211, the axial limiting portion 221 is correspondingly embedded in the axial limiting groove 212, so that the cable locking cover plate 22 is axially limited by the cable bearing bracket 21. Specifically, in the process that the cable locking cover plate 22 is pivotally mounted on the cable bearing bracket 21, the circumferential limiting hook portion 222 can elastically contract inward radially under a squeezing action of the circumferential limiting block 211, and the auxiliary locking elastic hook 223 can elastically contract inward radially under a squeezing action of the auxiliary locking portion 215; when the circumferential limiting hook portion 222 reaches the hook embedding groove 214, the auxiliary locking elastic hook 223 reaches the auxiliary locking embedding groove 2151, and when the circumferential limiting hook portion 222 hooks the circumferential limiting block 211, the auxiliary locking elastic hook 223 bounces back and is embedded into the auxiliary locking embedding groove 2151 and hooks the auxiliary locking portion 215, so that the auxiliary locking embedding groove 2151 can assist in limiting the relative positions of the cable locking cover plate 22 and the cable bearing bracket 21 via the auxiliary locking elastic hook 223. As shown in Figs. 3 and 5, one auxiliary locking elastic hook 223 may be provided, or a plurality of auxiliary locking elastic hooks 223 arranged side by side may be provided; correspondingly, one auxiliary locking embedding groove 2151 may be provided, or a plurality of auxiliary locking embedding grooves 2151 arranged side by side may be provided. There is no restriction to this herein. In this embodiment, the auxiliary locking portion 215 is integrally formed on the circumferential limiting block 211, and the auxiliary locking elastic hook 223 is integrally formed on the cable locking cover plate 22.

According to an embodiment of the present disclosure, as shown in Fig. 6, the cable locking cover plate 22 extends inward radially to form two elastic pressing sheets 224 arranged opposite to each other, and the leaky cable is pressed against the cable bearing bracket 21 by the two elastic pressing sheets 224 in a state that the leaky cable is arranged in the receiving space. In that way, the connection between the cable locking mechanism 2 and the leaky cable is further strengthened.

According to an embodiment of the present disclosure, the cable locking cover plate 22 is made of a material comprising a nylon material in which a polyolefin thermoplastic elastomer (POE) material and an environment-friendly melamine flame retardant are added. By adding the POE material, the toughness of the cable locking cover plate 22 can be effectively improved and the hygroscopicity of the material can be reduced. When the cable locking mechanism 2 is in a high-temperature or low-temperature climate, the cable locking cover plate 22 will not get brittle and fractured owing to loss of water, thus the stability of installation of the leaky cable is ensured. Furthermore, by adding an environmental-friendly melamine flame retardant into the material of the cable locking cover plate 22, the cable locking cover plate 22 has excellent heat resistance performance, which ensures an excellent flame-retardant and fire-resistant performance of the finished lifting appliance, that is, in the case that the finished lifting appliance is lit, it can automatically extinguish within 10 seconds after the open flame is removed.

Furthermore, the mass fraction of the polyolefin thermoplastic elastomer material is between 5% and 15% (e.g., 8%, 10%, or 12%, etc.). Besides, the nylon material used for the cable locking cover plate 2212 can present a fluorescent color after being extrusion-molded. Under the long-term action of train piston wind, if a lifting appliance is abnormal in the closed state, it is easier to find out the specific location where the lifting appliance falls off by distinguishing the difference in the reflective signs in a row under illumination, thereby it is more convenient for maintenance and reparation.

Based on the above structural description, the lifting appliance for leaky cable in the embodiments of the present disclosure has the following beneficial effects:
The cable locking mechanism 2 of the lifting appliance for leaky cable provided in the embodiments of the present disclosure comprises a supporting base plate 23, a cable bearing bracket 21 and a cable locking cover plate 22, wherein the supporting base plate 23 and the cable bearing bracket 21 are integrally formed, while the cable locking cover plate 22 is rotatably connected to the cable bearing bracket 21, so that the cable locking mechanism 2 is integrally connected, the number of parts is effectively reduced, thereby the adverse effect of falling-off of parts on the fixing stability of the leaky cable and the safety of railway is reduced; besides, the speed and efficiency of leaky cable installation can be greatly improved by means of the rotary connection between the cable locking cover plate 22 and the cable bearing bracket 21 and the cover snap-fitting and locking structure; in addition, the cable locking mechanism 2 can be entirely disassembled with special tools, so that it can be reused conveniently. Furthermore, the anchoring mechanism 1 of the lifting appliance for leaky cable provided in the embodiments of the present disclosure has a dual locking function, which enables the cable locking mechanism 2 to be stably anchored and mounted in the concrete foundation structure, thereby the overall installation stability of the lifting appliance for leaky cable is improved.

During use, the lifting appliance for leaky cable provided by the present disclosure can be installed through the following steps:
Step S1: drilling a hole in the tunnel wall first, then implanting the anchoring mechanism 1 in the hole, connecting the cable locking mechanism 2 to the anchoring mechanism 1, and adjusting the cable locking mechanism 2 to a position and orientation where the openable and closable locking end of the cable locking cover plate 22 faces upward;
Step S2: Turning the cable locking cover plate 22 to the side where the supporting base plate 23 locates, keeping it open, adjusting the working radiation angle of the leaky cable, aligning the raised back rib marker line of the leaky cable with the limiting groove 210 for back rib of the leaky cable, and lifting the leaky cable onto the cable bearing bracket 21.
Step S3: Turning over the opened cable locking cover plate 22 to a position above the leaky cable, pressing the central portion of the cable locking cover plate 22 in the radial direction of the leaky cable, so that the circumferential limiting hook portion 222 reaches the hook embedding groove 214 and the auxiliary locking elastic hook 223 reaches the auxiliary locking embedding groove 2151. Under the squeezing action of the leaky cable, the circumferential limiting hook portion 222 hooks the circumferential limiting block 211 to form a primary locking; the auxiliary locking elastic hook 223 bounces upward and is embedded into the auxiliary locking embedding groove 2151 and hooks the auxiliary locking portion 215 to form an auxiliary locking. **In** that process, the axial limiting portion 221 of the cable locking cover plate 22 is correspondingly embedded into the axial limiting groove 212 of the cable bearing bracket 21, so that the cable locking cover plate 22 is axially limited by the cable bearing bracket 21. When the circumferential limiting hook portion 222 hooks the circumferential limiting block 211 and the auxiliary locking elastic hook 223 is embedded into the auxiliary locking embedding groove 2151 and forms an interference fit on the contact surface so that it can't move anymore, the leaky cable is locked in position by the lifting appliance for leaky cable.

During use, the lifting appliance for leaky cable provided by the present disclosure can be disassembled through the following steps:
Gently prying the gap between the auxiliary locking elastic hook 223 and the auxiliary locking portion 215 with a lever tool to eject the auxiliary locking elastic hook 223, then continuing to pry the reserved disassembly hole 20 with the lever tool to eject the circumferential limiting hook portion 222, and pulling the cable locking cover plate 22 to open and pushing out the leaky cable; thus, the separation and disassembly of the leaky cable and the lifting appliance for leaky cable are completed.

While several embodiments of the present disclosure are described above, those skilled in the art can make various modifications or variations to the embodiments of the present disclosure according to the content disclosed in this application document without departing from the scope of the present disclosure.

## Claims

1. A lifting appliance for leaky cable, **characterized in that**, comprising:
an anchoring mechanism (1) comprising a connecting screw rod (11), a locking member (12), and a conical pin (14), wherein the locking member (12) comprises a connecting portion (121), a top supporting portion (122) and an anchoring portion (123) that are connected sequentially; the locking member (12) is connected to a distal end of the connecting screw rod (11) via the connecting portion (121), the top supporting portion (122) is located at a distal end of the connecting portion (121), the anchoring portion (123) is located at a distal end of the top supporting portion (122), a first anchoring hole is formed in the anchoring portion (123), and the conical pin (14) can be embedded into the first anchoring hole and force the anchoring portion (123) to expand outward radially, so that the anchoring portion (123) is configured to be fixed in a concrete foundation structure; and
a cable locking mechanism (2) comprising at least one cable bearing bracket (21) and at least one cable locking cover plate (22), wherein a circumferential limiting block (211) and an axial limiting groove (212) are formed on the cable bearing bracket (21), an axial limiting portion (222) corresponding to the axial limiting groove (212) is formed on the cable locking cover plate (22), and a circumferential limiting hook portion (222) corresponding to the circumferential limiting block (211) is formed on the cable locking cover plate (22); the cable locking cover plate (22) can be pivotally mounted on the cable bearing bracket (21), and a receiving space for mounting a leaky cable is formed between the cable bearing bracket (21) and the cable locking cover plate (22);
wherein the cable locking mechanism (2) is connected to an end of the anchoring mechanism (1) adapted to extend out of the concrete foundation structure,
wherein the diameter of the conical pin (14) is in a gradually enlarged arrangement from a proximal end to a distal end, and a maximum value of the diameter of the conical pin (14) is greater than the diameter of the first anchoring hole,
**characterized in that** the diameter of the top supporting portion (122) is in a gradually enlarged arrangement from a proximal end to a distal end; the anchoring mechanism (1) further has an expansion clamp ring (14) sleeved on the connecting portion (121), a second anchoring hole is formed in the expansion clamp ring (14), a maximum value of the diameter of the top supporting portion (122) is greater than the diameter of the second anchoring hole, and the top supporting portion (122) can be embedded into the second anchoring hole and force the expansion clamp ring (14) to expand outward radially.

2. The lifting appliance for leaky cable according to claim 1, wherein the cable locking mechanism further has a supporting base plate (23), a mounting hole (231) is formed at the center of the supporting base plate, and the anchoring mechanism is connected to the supporting base plate through the mounting hole.

3. The lifting appliance for leaky cable according to claim 2, wherein the anchoring mechanism further has a connecting threaded sleeve (15) and a fixing bolt (16), wherein the connecting threaded sleeve is connected to the connecting screw rod via threads, and the fixing bolt is connected to the connecting threaded sleeve via threads after passing through the mounting hole, so as to fix the cable locking mechanism to the anchoring mechanism.

4. The lifting appliance for leaky cable according to claim 1, wherein the axial limiting groove is formed at the central portion of the circumferential limiting block, the cable bearing bracket extends inward radially to form two positioning portions opposite to each other in the axial direction, the circumferential limiting block is located between the two positioning portions, and a hook embedding groove (214) is formed between the two positioning portions; in the process that the cable locking cover plate is pivotally mounted on the cable bearing bracket, the circumferential limiting hook portion can elastically contract inward radially under a squeezing action of the circumferential limiting block, and can bounce back to a lower end face of the circumferential limiting block through the hook embedding groove and hook the circumferential limiting block, so as to lock the cable locking cover plate and the cable bearing bracket.

5. The lifting appliance for leaky cable according to claim 4, wherein the circumferential limiting block extends to form an auxiliary locking portion protruding beyond the two positioning portions, an auxiliary locking embedding groove is formed in the auxiliary locking portion, the cable locking cover plate extends outward radially to form an auxiliary locking elastic hook corresponding to the auxiliary locking embedding groove; when the circumferential limiting hook portion hooks the circumferential limiting block, the auxiliary locking elastic hook can be elastically embedded into the auxiliary locking embedding groove to assist the locking between the cable locking cover plate and the cable bearing bracket; and when the circumferential limiting hook portion hooks the circumferential limiting block, the axial limiting portion is correspondingly embedded in the axial limiting groove, so that the cable locking cover plate is axially limited by the cable bearing bracket.

6. The lifting appliance for leaky cable according to claim 5, wherein the cable locking cover plate extends inward radially to form two elastic pressing sheets opposite to each other, and the leaky cable is pressed against the cable bearing bracket by the two elastic pressing sheets in a state that the leaky cable is arranged in the receiving space.

7. The lifting appliance for leaky cable according to claim 1, wherein the cable locking cover plate is made of a material comprising a nylon material in which a polyolefin thermoplastic elastomer material and an environment-friendly melamine flame retardant are added.

8. The lifting appliance for leaky cable according to claim 7, wherein a mass fraction of the polyolefin thermoplastic elastomer material is between 5% and 15%.

## Patentansprüche

1. Aufhängvorrichtung für Leckkabel, **dadurch gekennzeichnet, dass** sie umfasst:
einen Verankerungsmechanismus (1), der eine Verbindungsgewindestange (11), ein Verriegelungselement (12) und einen Konusstift (14) umfasst, wobei das Verriegelungselement (12) einen Verbindungsabschnitt (121), einen oberen Stützabschnitt (122) und einen Verankerungsabschnitt (123) umfasst, die nacheinander verbunden sind; das Verriegelungselement (12) über den Verbindungsabschnitt (121) mit einem distalen Ende der Verbindungsgewindestange (11) verbunden ist, der obere Stützabschnitt (122) an einem distalen Ende des Verbindungsabschnitts (121) angeordnet ist, der Verankerungsabschnitt (123) an einem distalen Ende des oberen Stützabschnitts (122) angeordnet ist, ein erstes Verankerungsloch in dem Verankerungsabschnitt (123) ausgebildet ist, und der Konusstift (14) in das erste Verankerungsloch eingebettet werden kann und den Verankerungsabschnitt (123) zwingen kann, sich radial nach außen auszudehnen, sodass der Verankerungsabschnitt (123) so ausgebildet ist, dass er in einer Betonfundamentstruktur befestigt wird; und
einen Kabelverriegelungsmechanismus (2), der mindestens eine Kabeltragehalterung (21) und mindestens eine Kabelverriegelungsdeckplatte (22) umfasst, wobei ein Umfangsbegrenzungsblock (211) und eine Axialbegrenzungsnut (212) auf der Kabeltragehalterung (21) ausgebildet sind, ein der Axialbegrenzungsnut (212) entsprechender Axialbegrenzungsabschnitt (222) auf der Kabelverriegelungsdeckplatte (22) ausgebildet ist, und ein Umfangsbegrenzungshakenabschnitt (222), der dem Umfangsbegrenzungsblock (211) entspricht, auf der Kabelverriegelungsdeckplatte (22) ausgebildet ist; die Kabelverriegelungsdeckplatte (22) schwenkbar an der Kabeltragehalterung (21) angebracht sein kann, und ein Aufnahmeraum zum Montieren eines Leckkabels zwischen der Kabeltragehalterung (21) und der Kabelverriegelungsdeckplatte (22) ausgebildet ist; wobei der Kabelverriegelungsmechanismus (2) mit einem Ende des Verankerungsmechanismus (1) verbunden ist, das ausgebildet ist, sich aus der Betonfundamentstruktur heraus zu erstrecken, wobei der Durchmesser des Konusstifts (14) vom proximalen Ende zum distalen Ende hin in einer sich allmählich vergrößernden Anordnung ist, und ein Maximalwert des Durchmessers des Konusstifts (14) größer ist als der Durchmesser des ersten Verankerungslochs,
**dadurch gekennzeichnet, dass** der Durchmesser des oberen Stützabschnitts (122) vom proximalen Ende zum distalen Ende hin in einer sich allmählich vergrößernden Anordnung ist; der Verankerungsmechanismus (1) weiter einen auf den Verbindungsabschnitt (121) aufgeschobenen Spreizklemmring (14) aufweist, in dem Spreizklemmring (14) ein zweites Verankerungsloch ausgebildet ist, ein Maximalwert des Durchmessers des oberen Stützabschnitts (122) größer ist als der Durchmesser des zweiten Verankerungslochs, und der obere Stützabschnitt (122) in das zweite Verankerungsloch eingebettet werden kann und den Spreizklemmring (14) zwingen kann, sich radial nach außen auszudehnen.

2. Aufhängvorrichtung für Leckkabel nach Anspruch 1, wobei der Kabelverriegelungsmechanismus weiter eine Stützgrundplatte (23) aufweist, ein Montageloch (231) im Zentrum der Stützgrundplatte ausgebildet ist, und der Verankerungsmechanismus über das Montageloch mit der Stützgrundplatte verbunden ist.

3. Aufhängvorrichtung für Leckkabel nach Anspruch 2, wobei der Verankerungsmechanismus weiter eine Verbindungsgewindehülse (15) und einen Befestigungsbolzen (16) aufweist, wobei die Verbindungsgewindehülse über Gewinde mit der Verbindungsgewindestange verbunden ist, und der Befestigungsbolzen, nachdem er durch das Montageloch hindurchgeführt wurde, über Gewinde mit der Verbindungsgewindehülse verbunden ist, um dadurch den Kabelverriegelungsmechanismus an dem Verankerungsmechanismus zu befestigen.

4. Aufhängvorrichtung für Leckkabel nach Anspruch 1, wobei die Axialbegrenzungsnut an dem mittleren Abschnitt des Umfangsbegrenzungsblocks ausgebildet ist, die Kabeltragehalterung sich radial nach innen erstreckt, um zwei in Axialrichtung einander gegenüberliegende Positionierabschnitte auszubilden, der Umfangsbegrenzungsblock zwischen den zwei Positionierabschnitten angeordnet ist, und eine Hakeneinbettnut (214) zwischen den zwei Positionierabschnitten ausgebildet ist; in dem Vorgang, in dem die Kabelverriegelungsdeckplatte schwenkbar an der Kabeltragehalterung angebracht wird, kann sich der Umfangsbegrenzungshakenabschnitt unter einer Quetschwirkung des Umfangsbegrenzungsblocks elastisch radial nach innen zusammenziehen, und kann über die Hakeneinbettnut zu einer unteren Endfläche des Umfangsbegrenzungsblocks zurückspringen und den Umfangsbegrenzungsblock einhaken, um dadurch die Kabelverriegelungsdeckplatte und die Kabeltragehalterung zu verriegeln.

5. Aufhängvorrichtung für Leckkabel nach Anspruch 4, wobei sich der Umfangsbegrenzungsblock erstreckt, um einen Hilfsverriegelungsabschnitt auszubilden, der über die zwei Positionierabschnitte hinausragt, eine Hilfsverriegelungseinbettnut in dem Hilfsverriegelungsabschnitt ausgebildet ist, die Kabelverriegelungsdeckplatte sich radial nach außen erstreckt, um einen der Hilfsverriegelungseinbettnut entsprechenden elastischen Hilfsverriegelungshaken auszubilden; wenn der Umfangsbegrenzungshakenabschnitt den Umfangsbegrenzungsblock einhakt, kann der elastische Hilfsverriegelungshaken elastisch in die Hilfsverriegelungseinbettnut eingebettet werden, um die Verriegelung zwischen der Kabelverriegelungsdeckplatte und der Kabeltragehalterung zu unterstützen; und wenn der Umfangsbegrenzungshakenabschnitt den Umfangsbegrenzungsblock einhakt, ist der Axialbegrenzungsabschnitt entsprechend in die Axialbegrenzungsnut eingebettet, sodass die Kabelverriegelungsdeckplatte durch die Kabeltragehalterung axial begrenzt ist.

6. Aufhängvorrichtung für Leckkabel nach Anspruch 5, wobei sich die Kabelverriegelungsdeckplatte radial nach innen erstreckt, um zwei einander gegenüberliegende elastische Andrucklaschen auszubilden, und das Leckkabel durch die zwei elastischen Andrucklaschen gegen die Kabeltragehalterung gedrückt wird, in einem Zustand, in dem das Leckkabel in dem Aufnahmeraum angeordnet ist.

7. Aufhängvorrichtung für Leckkabel nach Anspruch 1, wobei die Kabelverriegelungsdeckplatte aus einem Material hergestellt ist, das ein Nylonmaterial umfasst, in dem ein thermoplastisches Polyolefin-Elastomermaterial und ein umweltfreundliches Melamin-Flammschutzmittel zugesetzt sind.

8. Aufhängvorrichtung für Leckkabel nach Anspruch 7, wobei ein Massenanteil des thermoplastischen Polyolefin-Elastomermaterials zwischen 5 % und 15 % liegt.

## Revendications

1. Appareil de levage pour câble rayonnant, **caractérisé en ce qu'**il comprend :
un mécanisme (1) d'ancrage comprenant une tige (11) filetée de liaison, un élément (12) de verrouillage, et une cheville (14) conique, dans lequel l'élément (12) de verrouillage comprend une partie (121) de liaison, une partie (122) d'appui supérieure et une partie (123) d'ancrage qui sont reliées séquentiellement ; l'élément (12) de verrouillage est relié à une extrémité distale de la tige (11) filetée de liaison par l'intermédiaire de la partie (121) de liaison, la partie (122) d'appui supérieure est située à une extrémité distale de la partie (121) de liaison, la partie (123) d'ancrage est située à une extrémité distale de la partie (122) d'appui supérieure, un premier trou d'ancrage est formé dans la partie (123) d'ancrage, et la cheville (14) conique peut être encastrée dans le premier trou d'ancrage et forcer la partie (123) d'ancrage à se dilater radialement vers l'extérieur, de sorte que la partie (123) d'ancrage est configurée pour être fixée dans une structure de fondation en béton ; et
un mécanisme (2) de verrouillage de câble comprenant au moins un support (21) porteur de câble et au moins une plaque (22) de couverture de verrouillage de câble, dans lequel un bloc (211) de limitation circonférentielle et une rainure (212) de limitation axiale sont formés sur le support (21) porteur de câble, une partie (221) de limitation axiale correspondant à la rainure (212) de limitation axiale est formée sur la plaque (22) de couverture de verrouillage de câble, et une partie (222) de crochet de limitation circonférentielle correspondant au bloc (211) de limitation circonférentielle est formée sur la plaque (22) de couverture de verrouillage de câble ; la plaque (22) de couverture de verrouillage de câble peut être montée de manière pivotante sur le support (21) porteur de câble, et un espace de réception permettant de monter un câble rayonnant est formé entre le support (21) porteur de câble et la plaque (22) de couverture de verrouillage de câble ;
dans lequel le mécanisme (2) de verrouillage de câble est relié à une extrémité du mécanisme (1) d'ancrage adaptée pour s'étendre hors de la structure de fondation en béton,
dans lequel le diamètre de la cheville (14) conique se trouve dans un agencement graduellement agrandi d'une extrémité proximale à une extrémité distale, et une valeur maximale du diamètre de la cheville (14) conique est supérieure au diamètre du premier trou d'ancrage,
**caractérisé en ce que** le diamètre de la partie (122) d'appui supérieure se trouve dans un agencement graduellement agrandi d'une extrémité proximale à une extrémité distale ; le mécanisme (1) d'ancrage présente en outre une bague (14) de serrage expansible emmanchée sur la partie (121) de liaison, un deuxième trou d'ancrage est formé dans la bague (14) de serrage expansible, une valeur maximale du diamètre de la partie (122) d'appui supérieure est supérieure au diamètre du deuxième trou d'ancrage, et la partie (122) d'appui supérieure peut être encastrée dans le deuxième trou d'ancrage et forcer la bague (14) de serrage expansible à se dilater radialement vers l'extérieur.

2. Appareil de levage pour câble rayonnant selon la revendication 1, dans lequel le mécanisme de verrouillage de câble présente en outre une plaque (23) de base d'appui, un trou (231) de montage est formé au centre de la plaque de base d'appui, et le mécanisme d'ancrage est relié à la plaque de base d'appui à travers le trou de montage.

3. Appareil de levage pour câble rayonnant selon la revendication 2, dans lequel le mécanisme d'ancrage présente en outre un manchon (15) fileté de liaison et un boulon (16) de fixation, dans lequel le manchon fileté de liaison est relié à la tige filetée de liaison par l'intermédiaire de filets, et le boulon de fixation est relié au manchon fileté de liaison par l'intermédiaire de filets après être passé à travers le trou de montage, de manière à fixer le mécanisme de verrouillage de câble au mécanisme d'ancrage.

4. Appareil de levage pour câble rayonnant selon la revendication 1, dans lequel la rainure de limitation axiale est formée au niveau de la partie centrale du bloc de limitation circonférentielle, le support porteur de câble s'étend radialement vers l'intérieur pour former deux parties de positionnement opposées l'une à l'autre dans la direction axiale, le bloc de limitation circonférentielle est situé entre les deux parties de positionnement, et une rainure (214) d'encastrement de crochet est formée entre les deux parties de positionnement ; dans le processus dans lequel la plaque de couverture de verrouillage de câble est montée de manière pivotante sur le support porteur de câble, la partie de crochet de limitation circonférentielle peut se contracter élastiquement radialement vers l'intérieur sous une action de pressage du bloc de limitation circonférentielle, et peut revenir par rebond vers une face d'extrémité inférieure du bloc de limitation circonférentielle à travers la rainure d'encastrement de crochet et accrocher le bloc de limitation circonférentielle, de manière à verrouiller la plaque de couverture de verrouillage de câble et le support porteur de câble.

5. Appareil de levage pour câble rayonnant selon la revendication 4, dans lequel le bloc de limitation circonférentielle s'étend pour former une partie de verrouillage auxiliaire faisant saillie au-delà des deux parties de positionnement, une rainure d'encastrement de verrouillage auxiliaire est formée dans la partie de verrouillage auxiliaire, la plaque de couverture de verrouillage de câble s'étend radialement vers l'extérieur pour former un crochet élastique de verrouillage auxiliaire correspondant à la rainure d'encastrement de verrouillage auxiliaire ; lorsque la partie de crochet de limitation circonférentielle accroche le bloc de limitation circonférentielle, le crochet élastique de verrouillage auxiliaire peut être élastiquement encastré dans la rainure d'encastrement de verrouillage auxiliaire pour faciliter le verrouillage entre la plaque de couverture de verrouillage de câble et le support porteur de câble ; et lorsque la partie de crochet de limitation circonférentielle accroche le bloc de limitation circonférentielle, la partie de limitation axiale est encastrée de manière correspondante dans la rainure de limitation axiale, de sorte que la plaque de couverture de verrouillage de câble est limitée axialement par le support porteur de câble.

6. Appareil de levage pour câble rayonnant selon la revendication 5, dans lequel la plaque de couverture de verrouillage de câble s'étend radialement vers l'intérieur pour former deux feuilles élastiques de pression opposées l'une à l'autre, et le câble rayonnant est pressé contre le support porteur de câble par les deux feuilles élastiques de pression dans un état dans lequel le câble rayonnant est agencé dans l'espace de réception.

7. Appareil de levage pour câble rayonnant selon la revendication 1, dans lequel la plaque de couverture de verrouillage de câble est constituée d'un matériau comprenant un matériau en nylon dans lequel un matériau élastomère thermoplastique polyoléfinique et un retardateur de flamme à base de mélamine respectueux de l'environnement sont ajoutés.

8. Appareil de levage pour câble rayonnant selon la revendication 7, dans lequel une fraction massique du matériau élastomère thermoplastique polyoléfinique se trouve entre 5 % et 15 %.
